# EUROPEAN PATENT SPECIFICATION

(11) **EP 0 673 405 B1**
(45) Date of publication and mention of the grant of the patent: **27.01.1999**
(21) Application number: 94903417.7
(22) Date of filing: 03.12.1993
(51) Int. Cl.: C10G 11/05, C01B 39/00, B01J 29/06

(54) **CRACKING PROCESS AND ZSM-5 CATALYST PRODUCED THEREFOR**
KRACKVERFAHREN UND DAZU HERGESTELLTER ZSM-5-KATALYSATOR
CRAQUAGE CATALYTIQUE ET CATALYSEUR ZSM-5 PRODUIT A CET EFFET

(30) Priority: 11.12.1992 US 988992; 11.12.1992 US 988993
(43) Date of publication of application: 27.09.1995
(73) Proprietor: MOBIL OIL CORPORATION, Fairfax, Virginia 22037-0001 (US)
(72) Inventor: DEGNAN, Thomas, Francis, Morrestown, NJ 08057 (US); KLOCKE, Donald, Joseph, Somerdale, NJ 08083 (US); KOWALSKI, Jocelyn, Anne, Clarksboro, NJ 08080 (US); RUBIN, Mae, Koenig, Bala Cynwyd, PA 19004 (US)
(74) Representative: Kador & Partner
(86) International application number: US9311724
(87) International publication number: WO9413754

(56) References cited:
- EP-A- 0 202 797
- US-A- 3 758 403
- US-A- 4 296 083
- US-A- 4 567 152
- US-A- 5 055 437
- US-A- 5 145 659

## Description

The present invention relates to a process for cracking a hydrocarbon feed over a particular ZSM-5 catalyst composition and to a method for producing the ZSM-5 catalyst composition.

There is a growing need for higher octane in the refinery gasoline pool, particularly since the phase-out of lead additives for gasoline both in the U.S. and abroad. Decreases in octane sensitivity, i.e., the difference between research and motor octane, are especially desirable. Increased alkylate and potential alkylate are also needed from today's gasoline manufacturing processes. Some C₃ and C₄ olefins are useful by-products of such a manufacturing process; increases in these olefins are desired. These light olefins are used to make ethers and/or alcohols.

Most options available to refinery operators have limited potential. Pyrolysis units or thermal crackers produce large amounts of olefins, but little gasoline. Fluid catalytic cracking (FCC) with shape-selective cracking additives, or large-pore cracking catalyst containing such additives, can yield high octane gasoline but to date has had only limited potential to increase yields of light olefins. A high severity, shape-selective cracking process is also available. However, like the closely related pyrolysis process, the high severity process makes large amounts of olefins and relatively small yields of highly aromatic, low octane gasoline.

For example, U.S. Patent 3,758,403 teaches the benefits of adding ZSM-5 to conventional large-pore cracking catalyst formulations. Example 2 of the patent uses a catalyst consisting of 5 wt.% ZSM-5, 10 wt.% REY, and 85 % clay. With a gas oil feedstock, the catalyst produced 11.42 vol.% propylene, and a total yield of alkylate and C₅⁺ gasoline of 89.1 vol.%. Example 3 of the patent uses a catalyst consisting of 10 wt.% ZSM-5, 10 wt.% REY, and 80 % clay. Although the ZSM-5 content doubled, propylene yields increased from 11.4 vol.% to only 13.6 vol.%. The total yield of alkylate and gasoline declined slightly, from 89.1 vol.% to 88.6 vol.%.

The ZSM-5 employed in U.S. Patent 3,758,403 was produced according to the teaching of U.S. Patent 3,702,886, which employs tetrapropylammonium cations as a directing agent. Many other methods have since been proposed for making ZSM-5. U.S. Patent 4,139,600 teaches a method for synthesis of zeolite ZSM-5 from a reaction mixture comprising, as a directing agent, an alkyldiamine. U.S. Patent 4,296,083 teaches synthesizing zeolites having a Constraint Index of 1 to 12 and an alumina/silica mole ratio of not greater than 0.083, such as ZSM-5, from a specified reaction mixture containing an organic nitrogen-containing cation provided by an amine selected from triethylamine, trimethylamine, tripropylamine, ethylenediamine, propanediamine, butanediamine, pentanediamine, hexanediamine, methylamine, ethylamine, propylamine, butylamine, dimethylamine, diethylamine, dipropylamine, benzylamine, aniline, pyridine, piperidine and pyrrolidine.

U.S. Patent 4,151,189 claims a method for synthesizing zeolites ZSM-5, ZSM-12, ZSM-35 and ZSM-38 containing an organic nitrogen cation from a specified reaction mixture containing a primary amine having 2 to 9 carbon atoms as a directing agent.

U.S. Patent 4,341,748 shows synthesis of ZSM-5 structure from reaction mixtures comprising ethanol, ZSM-5 seeds, ethanol and seeds, ethanol and ammonium hydroxide, and ethanol, ammonium hydroxide and ZSM-5 seeds. U.S. Patent 4,100,262 teaches synthesis of ZSM-5 from a reaction mixture comprising a tetraalkylammonium source and a tetraureacobalt (II) complex.

Lok et al. (3 Zeolites, 282-291 (1983)) teach numerous organic compounds which act as directing agents for synthesis of various crystalline materials, such as, for example, ZSM-5, ZSM-11, ZSM-12, ZSM-20, ZSM-35, ZSM-48, AlPO₄-5, AlPO₄-8, AlPO₄-20 and others.

Other publications teaching various organic directing agents for synthesis of crystalline ZSM-5 include, for example, U.S. Patent 4,592,902, teaching use of an alkyltropinium directing agent, alkyl being of 2 to 5 carbon atoms; and U.S. Patent 4,585,638, teaching use of diquaternary (alkyl)₃N⁺(CH₂)₆N⁺ (alkyl)₃, alkyl being propyl or butyl.

More recently, attention has been focussed on non-organic synthesis routes for ZSM-5, see, for example, EP-B-202797.

Surprisingly, it has now been found that a particular ZSM-5 catalyst composition, synthesized from a particular organic directing agent, when used as an additive catalyst in hydrocarbon cracking results in product rich in high octane gasoline, alkylate, gasoline plus potential alkylate, and petrochemical grade lower olefins, e.g., propylene.

Accordingly, the invention resides in one aspect in a process for converting feedstock hydrocarbon compounds to product hydrocarbon compounds having a lower molecular weight than the feedstock hydrocarbon compounds which comprises contacting said feedstock with a catalyst composition comprising a large-pore molecular sieve material and an additive catalyst composition comprising crystalline material having the structure of ZSM-5 and a silica/alumina mole ratio of less than 30, said crystalline material having, as-synthesized, the following formula on an anhydrous basis:

(x)M₂O:(0.2 to 1.4)R₂O:Al₂O₃:(y)SiO₂

wherein x is a number greater than 0.1, M is alkali or alkaline earth metal, R is n-propylamine, and y is a number less than 30, and said additive catalyst composition having an alpha value greater than 30.

Preferably, the additive catalyst provides up to 6 wt.% ZSM-5 crystals, for example from 0.01 wt.% to 6 wt.% ZSM-5 crystals, more preferably from 0.3 wt.% to 4.5 wt.%, based on total catalyst inventory.

In a further aspect, the invention resides in a method for producing the additive catalyst composition employed in the process of said first aspect, the method comprising the steps of:
(i) forming a reaction mixture hydrogel having a pH of from 10 to 14 and containing sources of alkali or alkaline earth metal (M) cations; an oxide of trivalent element (X) ; an oxide of tetravalent element (Y); n-propylamine directing agent (R); and water, said reaction mixture having a composition in terms of mole ratios, within the following ranges:

| | |
|---|---|
| YO₂/XO₃ | <40 |
| H₂O/YO₂ | 10 to 35 |
| OH⁻/YO₂ | 0.1 to 0.3 |
| M/YO₂ | 0.2 to 0.6 |
| R/YO₂ | 0.01 to 0.6 |

(ii) maintaining the reaction mixture until crystals of ZSM-5 are formed,
(iii) recovering the ZSM-5 crystals from the reaction mixture,
(iv) ammonium exchanging the recovered ZSM-5 crystals,
(v) deagglomerating the ion-exchanged crystals,
(vi) slurrying a matrix material with the deagglomerated ZSM-5 crystals at a pH of 2 to 12 to yield a ZSM-5/matrix material comprising from 5 to 80 wt.% ZSM-5 and from 20 to 95 wt.% matrix,
(vii) drying the ZSM-5/matrix material, and
(viii) converting the dried ZSM-5/matrix material to the protonic form having an alpha value greater than 30.

In catalytic cracking, high molecular weight hydrocarbons are converted to lower molecular weight hydrocarbons of suitable volatility to permit their use as liquid fuels. The combustion characteristics of gasoline are assessed empirically by assigning the fuel an octane rating. This is generally defined as a comparison with a primary reference which is the percentage of iso-octane (2,2,4-trimethylpentane) in an n-heptane/iso-octane mixture to which the gasoline under examination is equivalent in terms of combustion behavior when considering the octane ratings of n-heptane and iso-octane to be zero and 100 respectively. Both RON and MON can be tested on the same single-cylinder, four-stroke engine of standardized design. RON signifies the research octane number, MON signifies the motor octane number, and the terms are used to describe the knocking characteristics of gasoline, that is, its combustion behavior. For a measurement of RON, the engine speed used is 600 rpm which yields results comparable to an automobile engine operated at low speed. For a measurement of MON, the engine speed is 900 rpm which approximates higher speed cruising conditions. Generally, higher octane numbers are found by the research method compared to the motor method for the same gasoline sample. The average of the RON and MON, known as the road octane number, gives an indication of typical performance in an engine. The higher the octane, the better the combustion behavior in a spark-ignition engine. It has been found that road octane number correlates much more closely to the motor octane number than the research octane. Generally, aromatics and branched paraffinic and olefinic hydrocarbons have higher octane values than acyclic or linear paraffinic hydrocarbons.

In conjunction with catalytic cracking to produce gasoline product, alkylate and potential alkylate may result from the cracking process. This indirectly leads to product of increased octane because high octane, highly branched paraffinic gasoline blending stocks are produced principally by alkylation of C₃ and C₄ olefins with isobutane. Unlike cracking, alkylation makes larger branched hydrocarbons from smaller hydrocarbons and these larger branched hydrocarbons are inherently higher in octane.

The present process not only provides a high octane product and product alkylate and potential alkylate, but significantly more light olefins, especially propylene. The increase in propylene product at the expense of other olefins is an unexpected, very valuable occurrence. The propylene is high quality, petrochemical grade, and may be used for manufacture of valuable ethers and/or alcohols, or as an alkylating agent.

The additive catalyst of the invention provides high selectivity to propylene as the light olefin product. In other respects, it provides comparable catalytic performance compared to the best of presently used ZSM-5 FCC additive catalysts. Further, the additive catalyst of the invention provides catalyst usage improvements, such as ease of handling, loading, and processing, found desirable by refiners.

### Feeds

The feedstock, that is, the hydrocarbons to be cracked, may include in whole or in part, a gas oil (e.g., light, medium, or heavy gas oil) having an initial boiling point above 204°C, a 50 % point range of at least 260°C and an end point range of at least 315°C. The feedstock may also include vacuum gas oils, thermal oils, residual oils, cycle stocks, whole top crudes, tar sand oils, shale oils, synthetic fuels, heavy hydrocarbon fractions derived from the destructive hydrogenation of coal, tar, pitches, asphalts, hydrotreated feedstocks derived from any of the foregoing, and the like. As will be recognized, the distillation of higher boiling petroleum fractions above about 400°C must be carried out under vacuum in order to avoid thermal cracking. The boiling temperatures utilized herein are expressed in terms of convenience of the boiling point corrected to atmospheric pressure. Resids or deeper cut gas oils with high metals contents can also be cracked using the invention.

### Process

The present invention provides a process for converting feedstock hydrocarbon compounds to product hydrocarbon compounds of lower molecular weight than the feedstock hydrocarbon compounds. In particular, the present invention provides a process for catalytically cracking a hydrocarbon feed to a mixture of products comprising gasoline, alkylate, potential alkylate, and propylene in the presence of a cracking catalyst under catalytic cracking conditions. Catalytic cracking units which are amenable to the process of the invention operate at temperatures from 200°C to 870°C and under reduced, atmospheric or superatmospheric pressure. The catalytic process can be either fixed bed, moving bed or fluidized bed and the hydrocarbon flow may be either concurrent or countercurrent to the catalyst flow. The process of the invention is particularly applicable to the Fluid Catalytic Cracking (FCC) and Thermofor Catalytic Cracking (TCC) processes, especially the FCC process. In both of these processes, the hydrocarbon feed and catalyst are passed through a reactor and the catalyst is regenerated. The two processes differ substantially in the size of the catalyst particles and in the engineering contact and transfer which is at least partially a function of catalyst size.

The TCC process is a moving bed and the catalyst is in the shape of pellets or beads having an average particle size of 1/64 to 1/4 inch (0.4mm to 6mm). Active, hot catalyst beads progress downwardly cocurrent with a hydrocarbon charge stock through a cracking reaction zone. The hydrocarbon products are separated from the coked catalyst and recovered, and the catalyst is recovered at the lower end of the zone and regenerated.

Typically preferred TCC conversion conditions include an average reactor temperature of 450°C to 510°C; catalyst/oil volume ratio of 2 to 7; reactor space velocity of 1 to 2.5 vol./hr./vol.; and recycle to fresh feed ratio of 0 to 0.5 (volume).

The process of the invention is particularly applicable to Fluid Catalytic Cracking. In fluidized catalytic cracking processes, the catalyst is a fine powder of 10 to 200 microns. This powder is generally suspended in the feed and propelled upward in a reaction zone. A relatively heavy hydrocarbon feedstock, e.g., a gas oil, is admixed with a suitable cracking catalyst to provide a fluidized suspension and cracked in an elongated reactor, or riser, at elevated temperatures to provide a mixture of lighter hydrocarbon products. The gaseous reaction products and spent catalyst are discharged from the riser into a separator, e.g., a cyclone unit, located within the upper section of an enclosed stripping vessel, or stripper, with the reaction products being conveyed to a product recovery zone and the spent catalyst entering a dense catalyst bed within the lower section of the stripper. In order to remove entrained hydrocarbons from the spent catalyst prior to conveying the latter to a catalyst regenerator unit, an inert stripping gas, e.g., steam, is passed through the catalyst bed where it desorbs such hydrocarbons conveying them to the product recovery zone. The fluidizable catalyst is continuously circulated between the riser and the regenerator and serves to transfer heat from the latter to the former thereby supplying the thermal needs of the cracking reaction which is endothermic.

The FCC conversion conditions include a riser top temperature of 500°C to 595°C, preferably from 520°C to 565°C, and most preferably from 530°C to 550°C; catalyst/oil weight ratio of 3 to 12, preferably from 4 to 11, and most preferably from 5 to 10; and catalyst residence time of 0.5 to 15 seconds, preferably from 1 to 10 seconds.

### Large Pore Molecular Sieve Catalyst

The catalyst can contain any active component which has cracking activity. The active component may be a conventional large-pore molecular sieve including zeolite X (U.S. Patent 2,882,442); REX; zeolite Y (U.S. Patent 3,130,007); Ultrastable Y zeolite (USY) (U.S. Patent 3,449,070); Rare Earth exchanged Y (REY) (U.S. Patent 4,415,438); Rare Earth exchanged USY (REUSY); Dealuminated Y (DeAl Y) (U.S. Patent 3,442,792; U.S. Patent 4,331,694); Ultrahydrophobic Y (UHPY) (U.S. Patent 4,401,556); and/or dealuminated silicon-enriched zeolites, e.g., LZ-210 (U.S. Patent 4,678,765). Preferred are higher silica forms of zeolite Y. ZSM-20 (U.S. Patent 3,972,983) ; zeolite Beta (U.S. Patent 3,308,069); zeolite L (U.S. Patents 3,216,789; and 4,701,315); and naturally occurring zeolites such as faujasite, mordenite and the like may also be used. These materials may be subjected to conventional treatments, such as impregnation or ion exchange with rare earths to increase stability. These large-pore molecular sieves have a pore opening of greater than about 7 Angstroms. In current commercial practice most cracking catalysts contain these large-pore molecular sieves. The preferred molecular sieve of those listed above is a zeolite Y, more preferably an REY, USY or REUSY.

Other large-pore crystalline molecular sieves include pillared silicates and/or clays; aluminophosphates, e.g., ALPO₄-5, ALPO₄-8, VPI-5; silicoaluminophosphates, e.g., SAPO-5, SAPO-37, SAPO-31, SAPO-40; and other metal aluminophosphates. These are variously described in U.S. Patents 4,310,440; 4,440,871; 4,554,143; 4,567,029; 4,666,875; 4,742,033; 4,880,611; 4,859,314; and 4,791,083.

The preparation of some molecular sieve-containing catalysts may require reduction of the sodium content, as well as conversion to the acid (protonated) form. For example, with zeolites this can be accomplished by employing the procedure of converting the zeolite to an intermediate ammonium form as a result of ammonium ion exchange followed by calcination to provide the hydrogen form. The operational requirements of these procedures are well known in the art.

The molecular sieve catalyst may include phosphorus or a phosphorus compound for any of the functions generally attributed thereto, such as, for example, attrition resistance, stability, metals passivation, and coke make reduction.

To prepare the large-pore catalyst for use herein, a slurry may be formed by deagglomerating the molecular sieve, preferably in an aqueous solution. The slurry of the matrix material may be formed by mixing the desired matrix components such as clay and/or inorganic oxide in an aqueous solution. The molecular sieve slurry and the matrix slurry are then well mixed and spray dried to form catalyst particles of, for example, less than 200 microns in diameter.

### Additive Catalyst

The additive catalyst employed in the process of the invention includes a crystalline material having the structure of ZSM-5, a silica/alumina mole ratio of less than about 30, usually from 20 to less than 30, and a high as-synthesized alkali and/or alkaline earth metal to silica molar ratio. The as-synthesized crystal has a formula, on an anhydrous basis and in terms of y moles of SiO₂, as follows:

(x)M₂O:(0.2 to 1.4)R₂O:Al₂O₃: (y)SiO₂

wherein x is greater than about 0.1, usually greater than about 0.3, most often from 0.4 to 1.4, and y is less than about 30, usually from 20 to less than 30, more usually from 23 to less than 30. The M and R components are associated with the material as a result of their presence during crystallization, described in more detail below, and may be reduced or removed by post-crystallization methods herein more particularly described.

The synthesis of this special ZSM-5 crystalline material requires forming a reaction mixture hydrogel having a pH of 10 to 14, preferably from 11.5 to 13.5, and containing sources of alkali or alkaline earth metal (M) cations; an oxide of aluminum; an oxide of silicon; n-propylamine directing agent (R); and water, said reaction mixture having a composition in terms of mole ratios, within the following ranges:

| Reactants | Useful | Preferred |
|---|---|---|
| SiO₂/Al₂O₃ | < 40 | 20 to 35 |
| H₂O/SiO₂ | 10 to 35 | 10 to 30 |
| OH⁻/SiO₂ | 0.1 to 0.3 | 0.1 to 0.2 |
| M/SiO₂ | 0.2 to 0.6 | 0.3 to 0.5 |
| R/SiO₂ | 0.01 to 0.6 | 0.02 to 0.3 |

The reaction is maintained until crystals of the ZSM-5 structure are formed. Reaction conditions generally involve heating the foregoing reaction mixture to a temperature of 100°C to 200°C for a period of time of 10 hours to 100 hours. A more preferred temperature range is from 130°C to 180°C with the amount of time at a temperature in such range being from 20 hours to 60 hours. The solid product comprising ZSM-5 crystals is recovered from the reaction medium, such as by cooling the whole to room temperature, filtering, and water washing.

The additive catalyst comprising this specially prepared ZSM-5 for use herein is prepared as follows:

The recovered ZSM-5 crystals are ammonium exchanged such as by contact with, for example, ammonium nitrate, sulfate, hydroxide, or halide, e.g., chloride, solution. The exchanged crystals may then be washed with, for example, deionized water, and dried.

The ion-exchanged crystalline material is then deagglomerated. This may be accomplished by ball milling an aqueous slurry of the zeolite crystals.

The deagglomerated crystalline ZSM-5 material is then slurried with matrix material such as, for example, silica, clay and/or alumina, at a pH of 2 to 12, preferably from 4 to 6 to yield a ZSM-5/matrix material composition comprising from 5 to 80 wt.% ZSM-5 and from 20 to 95 wt.% matrix. Phosphorus compounds, e.g., phosphoric acid, may be added to the composition in this step of the manufacture such that elemental phosphorus comprises from 1.5 to 5.5 wt.% of the matrix of the product material.

The final ZSM-5/matrix slurry is then dried, such as by spray drying to form a fluid powder, at a temperature of, for example, 65°C to 315°C.

This dried ZSM-5/matrix composition is then converted to the protonic form having an Alpha Value of greater than about 30. This conversion may be accomplished by, for example, acid treatment, ammonium exchange, and/or calcination. If acid treatment or ammonium exchange is performed, calcination will follow.

Acid treatment for this purpose comprises, for example, contacting the dried ZSM-5/matrix composition with a 0.1 to 1 N mineral acid such as, for example, hydrochloric acid, or a carboxylic or dicarboxylic acid such as, for example, oxalic acid, at room temperature up to 150°C. The acid treated composition may be washed with, for example, deionized water and again dried at a temperature of, for example, from 65°C to 315°C.

Ammonium exchange for this purpose comprises, for example, contacting the dried ZSM-5/matrix composition with ammonium nitrate, sulfate, hydroxide, and/or halide solution, washing the exchanged catalyst material with, for example, deionized water, and again drying the product catalyst material at a temperature of, for example, from 65°C to 315°C.

The dried ZSM-5/matrix composition, whether acid treated or ammonium exchanged or not, is then calcined at a temperature of 200°C to 550°C for 1 minute to 48 hours. The calcined ZSM-5/matrix catalyst will have an Alpha Value of greater than about 30, usually from greater than 30 to 1200. A preferred calcination procedure in accordance herewith would be to provide a calcined product catalyst which retains a trace amount of carbon residue. Therefore, partial calcination within the above conditions, e.g., at lower temperature and/or shorter time, is preferred.

### Matrix

The matrix, i.e., binder, materials used are resistant to the temperatures and other conditions e.g., mechanical attrition, which occur in various hydrocarbon conversion processes such as cracking. It is generally necessary that the catalysts be resistant to mechanical attrition, that is, the formation of fines which are small particles, e.g., less than 20 µm. The cycles of cracking and regeneration at high flow rates and temperatures, such as in an FCC process, have a tendency to break down the catalyst into fines, as compared with an average diameter of catalyst particles of about 60-90 microns. In an FCC process, catalyst particles range from 10 to 200 microns, preferably from 20 to 120 microns. Excessive generation of catalyst fines increases the refiner's catalyst costs.

The matrix may fulfill both physical and catalytic functions. Matrix materials include active or inactive inorganic materials such as clays, and/or metal oxides such as alumina or silica, titania, zirconia, or magnesia. The metal oxides may be in the form of a gelatinous precipitate or gel.

Use of an active matrix material in conjunction with the molecular sieve component that is combined therewith, may enhance the conversion and/or selectivity of the overall catalyst composition in certain hydrocarbon conversion processes. Inactive materials may serve as diluents to control the amount of conversion in a given process so that products can be obtained economically and in an orderly fashion without employing other means for controlling the rate of reaction. These materials may be incorporated as naturally occurring clays to improve the attrition resistance of the catalyst under commercial operating conditions.

Naturally occurring clays which can be composited with the catalyst include the montmorillonite and kaolin families which include the subbentonites, and the kaolins commonly known as Dixie, McNamee, Georgia and Florida clays or others in which the main mineral constituent is halloysite, kaolinite, dickite, nacrite or anauxite. Such clays can be used in the raw state as originally mined or initially subjected to calcination, acid treatment or chemical modification.

In addition to the foregoing materials, catalysts can be composited with a porous matrix material such as silica-alumina, silica-magnesia, silica-zirconia, silica-thoria, silica-beryllia, silica-titania, as well as ternary materials such as silica- alumina-thoria, silica-alumina-zirconia, silica-alumina-magnesia, silica-magnesia-zirconia. The matrix can be in the form of a cogel. A mixture of these components can also be used.

In general, the relative proportions of finely divided, crystalline molecular sieve component and inorganic oxide gel matrix vary widely, with the molecular sieve content ranging from 1 to 90 percent by weight, and more usually from 2 to 80 weight percent of the composite.

The large-pore molecular sieve material may comprise from 10 to 80 weight percent of the catalyst composition. For the additive catalyst, the specially synthesized ZSM-5 may comprise from 1 to 50 weight percent of the additive catalyst composition.

In order to more fully illustrate the nature of the invention and the manner of practicing same, the following examples are presented. In the examples, whenever adsorption data are set forth for comparison of sorptive capacities for water, cyclohexane and n-hexane, they are determined as follows:

A weighed sample of the calcined adsorbant is contacted with the desired pure adsorbate vapor in an adsorption chamber, evacuated to 1 mm Hg (133 Pa) and contacted with 12 mm Hg (1.6 kPa) of water vapor or 20 mm Hg (2.7 kPa) of n-hexane, or cyclohexane vapor, pressures less than the vapor-liquid equilibrium pressure of the respective adsorbate at room temperature. The pressure is kept constant (within about ± 0.5 mm) by addition of absorbate vapor controlled by a manostat during the adsorption period, which does not exceed about 8 hours. As adsorbate is adsorbed by the sorbant material, the decrease in pressure causes the manostat to open a valve which admits more adsorbate vapor to the chamber to restore the above control pressures. Sorption is complete when the pressure change is not sufficient to activate the manostat. The increase in weight is calculated as the adsorption capacity of the sample in g/100 g of calcined adsorbant.

When Alpha Value is examined, it is noted that the Alpha Value is an approximate indication of the catalytic cracking activity of the catalyst compared to a standard catalyst and it gives the relative rate constant (rate of normal hexane conversion per volume of catalyst per unit time). It is based on the activity of silica-alumina cracking catalyst taken as an Alpha of 1 (Rate Constant = 0.016 sec⁻¹). The Alpha Test is described in U.S. Patent 3,354,078; in the Journal of Catalysis, 4, 527 (1965); 6, 278 (1966); and 61, 395 (1980). The experimental conditions of the test used herein include a constant temperature of 538°C and a variable flow rate as described in detail in the Journal of Catalysis, 61, 395.

### EXAMPLE 1

ZSM-5 for use in the additive catalyst of the invention was synthesized as follows. A solution containing 1.53 parts 50 % NaOH solution in 1.89 parts H₂O was added to a solution containing 1 part Al₂(SO₄)₃ ® xH₂O (17.2% Al₂O₃) in 7.63 parts H₂O. To this mixture was added 3.38 parts Ultrasil (VN3SP) precipitated silica and 0.09 part ZSM-5 seeds followed by 0.39 part n-propylamine. The Ultrasil used is a precipitated, spray-dried silica manufactured by DeGussa Corporation containing about 90 wt.% SiO₂. The mixture was stirred until uniform. The reaction mixture had the following composition in mole ratios:

| | |
|---|---|
| SiO₂/Al₂O₃ = | 30.0 |
| OH⁻/SiO₂ = | 0.18 |
| R/SiO₂ = | 0.13 |
| H₂O/SiO₂ = | 13.3 |
| Na⁺/SiO₂ = | 0.38 |
| % solids = | 18.0 |

where R = n-propylamine.

The mixture was crystallized in a stirred reactor at 160°C for 26 hours. The crystals were filtered, washed with water, and dried at 120°C. A portion of the product was submitted for X-ray analysis and identified as having the structure of ZSM-5.

The chemical composition of the product crystalline material was, in wt.%:

| | |
|---|---|
| N = | 1.3 |
| Na = | 1.2 |
| Al₂O₃ = | 5.5 |
| SiO₂ = | 72.3 |
| Ash (1000°C) = | 88.4 |
| SiO₂/Al₂O₃, molar = | 22.3 |
| Carbon = | 4.2 |

The sorption capacities and surface area, after calcining the product crystalline material for 16 hours at 538°C, were determined to be:

| | |
|---|---|
| Cyclohexane, 40 Torr, wt.% = | 7.6 |
| n-Hexane, 40 Torr, wt.% = | 11.4 |
| H₂O, 12 Torr, wt.% = | 9.2 |
| Surface Area, m²/g = | 286 |

SEM analysis of the product material revealed a polycrystalline solid showing crystal facets of ZSM-5.

A calcined (3 hours at 538°C in air) portion of the product of this example was ammonium exchanged with 10% NH₄Cl solution to a sodium level of 34 ppm and calcined again to obtain the hydrogen form. The Alpha Value of this material was 1200.

### EXAMPLE 2 (Comparative)

For comparison purposes, a further ZSM-5 sample was synthesized as follows. In that synthesis, a solution containing 1.28 parts 50 % NaOH solution in 8.49 parts H₂O was added to a solution containing 1 part Al₂(SO₄)₃ ® xH₂O 47% solution (8.1 wt.% Al₂O₃). To this mixture was added 5.24 parts Ultrasil (VN3SP) precipitated silica, 0.04 part ZSM-5 seeds, 0.008 part Daxad-23, and 0.72 part 26 % brine solution, followed by 0.46 part n-propylamine. The mixture was stirred until uniform. The reaction mixture had the following composition in mole ratios:

| | |
|---|---|
| SiO₂/Al₂O₃ = | 78.2 |
| OH⁻/SiO₂ = | 0.07 |
| R/SiO₂ = | 0.10 |
| H₂O/SiO₂ = | 6.8 |
| Na⁺/SiO₂ = | 0.26 |
| % solids = | 28.4 |

where R = n-propylamine.

The mixture was crystallized in a stirred reactor at 149°C for 7 hours. The crystals were filtered, washed with water, and dried at 120°C. A portion of the product was submitted for X-ray analysis and identified as having the structure of ZSM-5.

The chemical composition of the product crystalline material was, in wt.%:

| | |
|---|---|
| Na = | < 0.5 |
| Al₂O₃ = | 5.3 |
| SiO₂ = | 83.7 |
| Ash (1000°C) = | 89 |
| SiO₂/Al₂O₃, molar = | 55 |

The surface area of this material was determined to be 340 m²/g.

A calcined portion of the product of this example was ammonium exchanged with 1N NH₄NO₃ to a sodium level of 121 ppm. The Alpha Value of this material was 800.

### EXAMPLE 3 (Comparative)

Another ZSM-5 sample was synthesized as follows. A solution containing 1.54 parts 50 % NaOH solution was added to a solution containing 1 part Al₂(SO₄)₃ ® xH₂O (17.2% Al₂O₃) in 10.1 parts H₂O. To this mixture was added 3.43 parts Ultrasil (VN3SP) precipitated silica. The mixture was stirred until uniform. The reaction mixture had the following composition in mole ratios:

| | |
|---|---|
| SiO₂/Al₂O₃ = | 32.7 |
| OH⁻/SiO₂ = | 0.17 |
| R/SiO₂ = | 0 |
| H₂O/SiO₂ = | 11.0 |
| Na⁺/SiO₂ = | 0.35 |
| % solids = | 21.0 |

The mixture was crystallized in a stirred reactor at 160°C for about 24 hours. The crystals were filtered, washed with water, and dried at 120°C. A portion of the product was submitted for X-ray analysis and identified as having the structure of ZSM-5.

The chemical composition of the product crystalline material was:

| | |
|---|---|
| Na = | 1358 ppm |
| Al₂O₃ = | 10.4 wt.% |
| SiO₂ = | 84.7 wt.% |
| Ash (1000°C) = | 95.1 wt.% |
| Carbon = | 0 |
| SiO₂/Al₂O₃, molar = | 26 |

The surface area of the product material was determined to be 340 m²/g.

A portion of the product of this example was ammonium exchanged with 1N NH₄NO₃ to a sodium level of 656 ppm. The Alpha Value of this material was 1361.

### EXAMPLE 4

Another ZSM-5 sample was synthesized for comparison purposes. A solution containing 0.72 part 50 % NaOH solution in 4.15 parts H₂O was added to a solution containing 1 part Al₂(SO₄)₃ ® xH₂O 47% solution (8.1% Al₂O₃). To this mixture was added 1.63 parts HiSil-233 precipitated hydrated silica manufactured by PPG Industries containing about 87 wt.% SiO₂, about 6 wt.% free H₂O, and about 4.5 wt.% bound H₂O of hydration. The mixture was stirred until uniform. The reaction mixture had the following composition in mole ratios:

| | |
|---|---|
| SiO₂/Al₂O₃ = | 27.0 |
| OH⁻/SiO₂ = | 0.18 |
| R/SiO₂ = | 0 |
| H₂O/SiO₂ = | 10.0 |
| Na⁺/SiO₂ = | 0.40 |
| % solids = | 26.7 |

The mixture was crystallized in a stirred reactor at 160°C for 46 hours. The crystals were filtered, washed with water, and dried at 120°C. A portion of the product was submitted for X-ray analysis and identified as having the structure of ZSM-5.

The chemical composition of the product crystalline material was, in wt.%:

| | |
|---|---|
| Na = | 2.6 |
| Al₂O₃ = | 6.2 |
| SiO₂ = | 83.6 |
| Ash (1000°C) = | 92.5 |
| SiO₂/Al₂O₃, molar = | 26 |

The surface area of this material was determined to be 299 m²/g.

A portion of the product of this example was ammonium exchanged with 1N NH₄NO₃ to a sodium level of 384 ppm. The Alpha Value of this material was 850.

### EXAMPLES 5 - 11

Additional examples of synthesis of the particular ZSM-5 crystals needed for this invention were carried out with the reaction mixture, crystallization, and product details presented in Table 1. Reaction mixture composition is given in molar ratios. Adsorption and surface area data were obtained on material having been calcined at 538°C as in Examples 1 - 4. Alpha values were obtained, as in Examples 1 - 4, for the hydrogen forms of the crystalline material.

**Table 1**

| Example | 5 | 6 | 7 | 8 | 9 | 10 | 11 |
|---|---|---|---|---|---|---|---|
| Reaction Mixture | | | | | | | |
| SiO₂/Al₂O₃ | 30.0 | 30.0 | 30.0 | 30.0 | 30.0 | 30.0 | 30.0 |
| OH⁻/SiO₂ | 0.18 | 0.18 | 0.18 | 0.18 | 0.18 | 0.18 | 0.18 |
| R/SiO₂ | 0.13 | 0.13 | 0.13 | 0.02 | 0.13 | 0.13 | 0.04 |
| H₂O/SiO₂ | 20.0 | 14.7 | 14.7 | 11.5 | 20.0 | 11.3 | 11.5 |
| Na⁺/SiO₂ | 0.3 | 0.38 | 0.38 | 0.38 | 0.38 | 0.38 | 0.38 |
| | | | | | | | |
| Seeds | No | Yes | Yes | Yes | No | Yes | Yes |
| | | | | | | | |

| Crystallization | | | | | | | |
|---|---|---|---|---|---|---|---|
| Temp, °C | 175 | 175 | 175 | 175 | 175 | 160 | 160 |
| Time, hrs. | 48 | 48 | 48 | 48 | 24 | 23 | 27 |
| Crystallinity, % | 100 | 110 | 85 | 95 | 105 | 95 | 90 |
| | | | | | | | |

| Composition | | | | | | | |
|---|---|---|---|---|---|---|---|
| N, wt.% | 1.90 | 2.05 | 1.85 | 0.30 | 1.4 | 1.3 | 0.75 |
| Na, wt.% | 0.14 | 0.19 | 0.37 | 2.3 | 0.85 | 1.4 | 1.2 |
| SiO₂/Al₂O₃ | 24.7 | 20.3 | 28.2 | 25.3 | 25.0 | 24.6 | 24.5 |
| | | | | | | | |

| Adsorption,% | | | | | | | |
|---|---|---|---|---|---|---|---|
| Cyclohexane | 7.6 | 6.8 | 6.9 | 4.9 | 6.5 | 6.7 | 7.1 |
| n-Hexane | 12.1 | 12.2 | 11.0 | 9.1 | 10.9 | 10.0 | 9.0 |
| H₂O | 11.0 | 10.1 | 8.7 | 9.6 | 9.5 | 9.2 | 8.9 |
| Surface Area, m²/g | 323 | 328 | 306 | 218 | 279 | 267 | 262 |
| | | | | | | | |
| Alpha Value | 1373 | 949 | 1488 | --- | --- | 953 | 1131 |

### EXAMPLE 12

Additive catalysts were prepared using the products of Examples 1, 2, 3, and 4. An additional additive catalyst was prepared using the product of a repeat of Example 3 (hereinafter 3'), except that the initial sodium content of the synthesis product was 2.7 wt.%, and the product of ammonium exchange with 1N NH₄NO₃ had a sodium level of 0.15 wt.%. As-synthesized portions of the zeolite products were ammonium exchanged with 1N NH₄NO₃, washed with deionized water, and dried at 120°C to form drycake. A 30 wt.% solids slurry of each drycake was ball -milled to reduce mean particle size in each instance to about 2.3 - 3.6 µm.

The milled slurries were combined with silica-alumina and clay matrix to form 25 wt.% ZSM-5 fluid catalysts. The matrix in each case contained 35 wt.% Kaopaque 10S kaolin clay and 65 wt.% silica-alumina gel. The gel contained 93 wt.% silica from Q-Brand sodium silicate and 7 wt.% alumina from aluminum sulfate. The gel was formed at 10 to 13°C at 8.6 wt.% solids. Sixty-five percent of the sodium in the sodium silicate was neutralized with sulfuric acid added to the slurries.

After spray drying at an average outlet temperature of 179°C, the catalysts were ammonium exchanged to remove sodium introduced by the matrix.

Small portions of each catalyst were calcined in a muffle furnace in air at 538°C for 2 hours to obtain samples which were submitted for determination of analytical properties and Alpha Values. The remainer of each catalyst was steamed for 10 hours at 788°C with 45 % steam and 55 % air at atmospheric pressure. Samples of the steamed catalysts were also submitted for determination of analytical properties and Alpha Values. Results of these tests are presented in Table 2.

**Table 2**

| **Comparison of Catalyst Properties** | | | | | |
|---|---|---|---|---|---|
| | ------------------- Calcined Catalyst-------------- | | | | |
| Zeolite Example | 1 | 2 | 3 | 3' | 4 |
| Sodium, ppm | 57 | 128 | 93 | 170 | 131 |
| Sorptions, g/100 g | | | | | |
| Water | 11.3 | NA | 6.6 | NA | 8.2 |
| n-C₆ | 8.5 | NA | 10.2 | NA | 9.7 |
| cy-C₆ | 8.2 | NA | 9.6 | NA | 9.3 |
| Real Density, g/cc | 2.26 | 2.36 | 2.36 | NA | 2.37 |
| Particle Density, g/cc | 1.29 | 1.18 | 1.15 | NA | 1.11 |
| Pore Volume, cc/g | 0.33 | 0.43 | 0.44 | NA | 0.48 |
| Surface Area, m²/g | 263 | 298 | 273 | NA | 275 |
| Alpha Value | 303 | 85 | 140 | NA | 53 |

| | ----------- Steam Deactivated Catalyst ---------- | | | | |
|---|---|---|---|---|---|
| Sorptions, g/100 g | | | | | |
| Water | 1.4 | NA | NA | NA | 1.2 |
| n-C₆ | 2.9 | NA | 2.7 | NA | 2.6 |
| cy-C₆ | 3.5 | NA | 3.3 | NA | 2.9 |
| Real Density, g/cc | 2.36 | NA | 2.37 | NA | 2.37 |
| Particle Density, g/cc | 1.44 | NA | 1.29 | NA | 1.23 |
| Pore Volume, cc/g | 0.27 | NA | 0.35 | NA | 0.39 |
| Surface Area, m²/g | 73 | NA | 98 | NA | 84 |
| Alpha Value | 3 | NA | 3 | 2 | 3 |

### EXAMPLE 13

Cracking catalyst blends were prepared by mixing a commercial cracking catalyst composed of 15 wt.% REY and 85 wt.% silica-based matrix with each of the additive catalysts prepared in Example 12. Catalysts A and E are in accordance with the invention, whereas the other catalysts are comparative. Catalyst I was made using as additive catalyst a material comprising 25 wt.% ZSM-5 as prepared in Example 2. Catalyst I was steamed 10 hours at 788°C with 100 % steam at 6 psig. The mixed catalysts were as follows:

| Catalyst | Wt.% Additive | Wt. % ZSM-5 | From Example |
|---|---|---|---|
| A | 8 | 2 | 1 |
| B | 8 | 2 | 2 |
| C | 8 | 2 | 3 |
| C' | 8 | 2 | 3' |
| D | 8 | 2 | 4 |
| E | 2 | 0.5 | 1 |
| F | 2 | 0.5 | 2 |
| G | 2 | 0.5 | 3 |
| H | 2 | 0.5 | 4 |
| I | 2 | 0.5 | 13 |

### EXAMPLE 14

The commercial REY cracking catalyst and additive catalyst/cracking catalyst mixtures used in Example 13 were evaluated in a fixed-fluidized bed cracking unit with Joliet Sour Heavy Gas Oil feedstock at 515°C and 1 minute on stream. The catalyst/oil ratios of the tests were varied through a range of from 3 to 6 to provide a range of conversions. Results of these tests at 70 % conversion are presented in Table 3 for the REY catalyst and Catalysts A, C, and D. Table 5 presents the test results for the REY catalyst and Catalysts E and I. Tables 4 and 6 present selectivity and activity comparisons between the catalysts. These test results indicate that the present process with catalysts A and E provides more alkylate, more gasoline plus potential alkylate, and selectively more propylene than the process using the other catalysts.

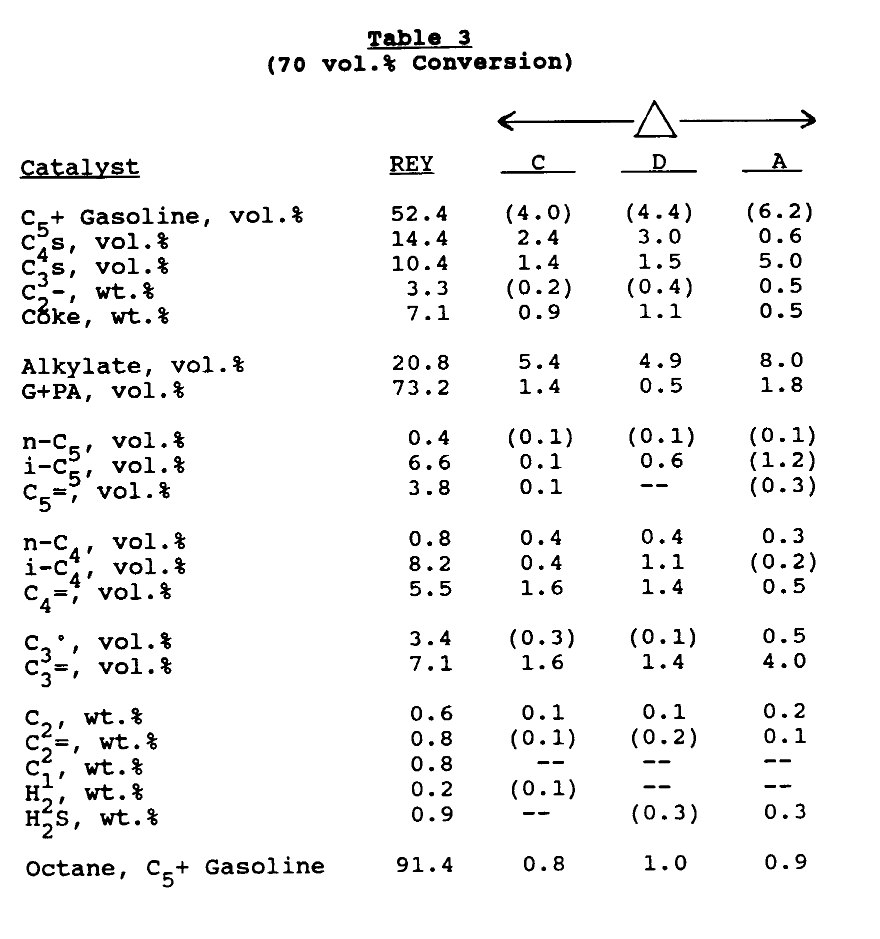

**Table 4**

| **(70 vol.% Conversion)** | | | |
|---|---|---|---|
| Catalyst | C | D | A |
| Selectivity | | | |
| ( - ΔC₅+ Gasoline/ RON) | 5.0 | 4.4 | 6.9 |
| ( - ΔC₅+ Gasoline/ PA) | 0.7 | 0.9 | 0.8 |
| | | | |
| C₃=/C₄= (vol.%/vol.%) | 1.2 | 1.2 | 1.9 |
| Δ C₃=/Δ C₄= (vol.%/vol.%) | 1.0 | 1.0 | 8.0 |
| | | | |
| C₃=/C₃° (vol.%/vol.%) | 2.8 | 2.6 | 2.9 |
| ΔC₃=/Δ(C₃= + C₃) | 1.2 | 1.1 | 0.9 |
| | | | |

| Activity | | | |
|---|---|---|---|
| (ΔRON/wt.% ZSM-5) | 0.4 | 0.5 | 0.5 |
| (ΔPA/ wt.% ZSM-5) | 2.8 | 2.5 | 4.0 |

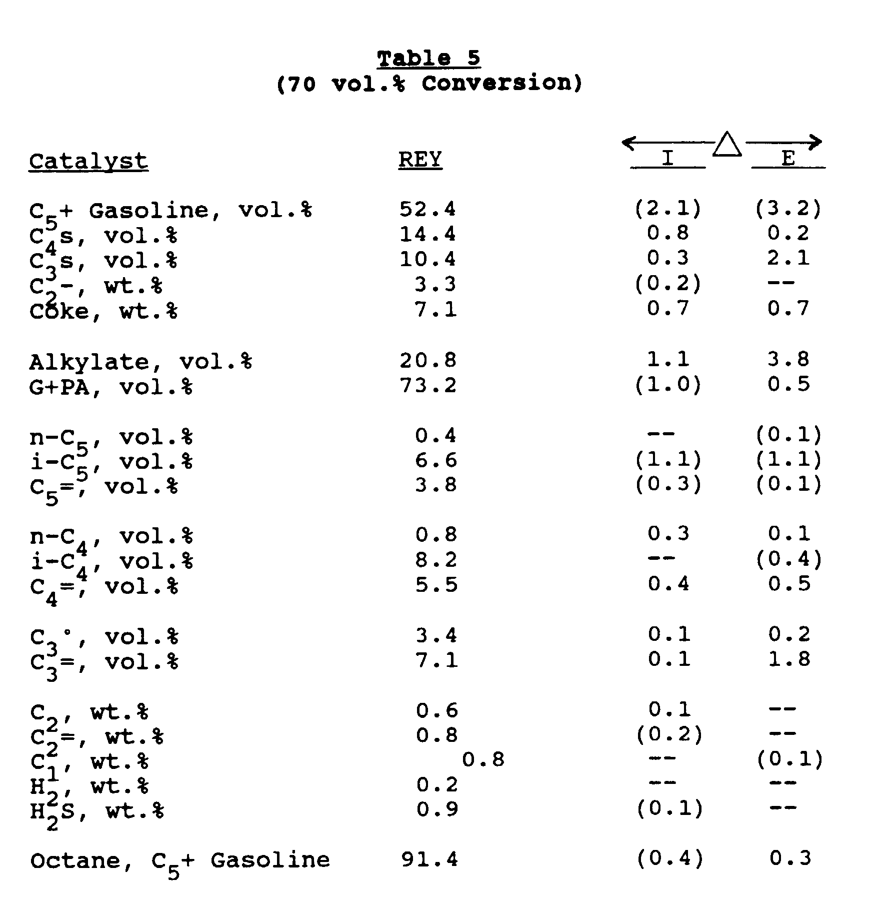

**Table 6**

| **(70 vol.% Conversion)** | | |
|---|---|---|
| Catalyst | I | E |
| Selectivity | | |
| ( - ΔC₅+ Gasoline/ RON) | (4.2) | 10.7 |
| ( - ΔC₅+ Gasoline/ PA) | 2.3 | 0.8 |
| | | |
| C₃=/C₄= (vol.%/vol.%) | 1.2 | 1.5 |
| ΔC₃=/ΔC₄= (vol.%/vol.%) | 0.3 | 3.6 |
| | | |
| C₃=/C₃° (vol.%/vol.%) | 2.1 | 2.5 |
| ΔC₃=/Δ (C₃= + C₃) | 0.5 | 0.9 |
| | | |

| Activity | | |
|---|---|---|
| (Δ RON/wt.% ZSM-5) | (0.3) | 0.2 |
| (Δ PA/ wt.% ZSM-5) | 0.5 | 1.9 |

### EXAMPLE 15

The evaluation tests of Example 14 are repeated here with Joliet Sour Heavy Gas Oil feedstock at 515°C and 1 minute on stream. Results of these tests at 65 % conversion are presented in Table 7 for the REY catalyst and Catalysts A, B, and C'. Table 8 presents selectivity and activity comparisons between the catalysts.

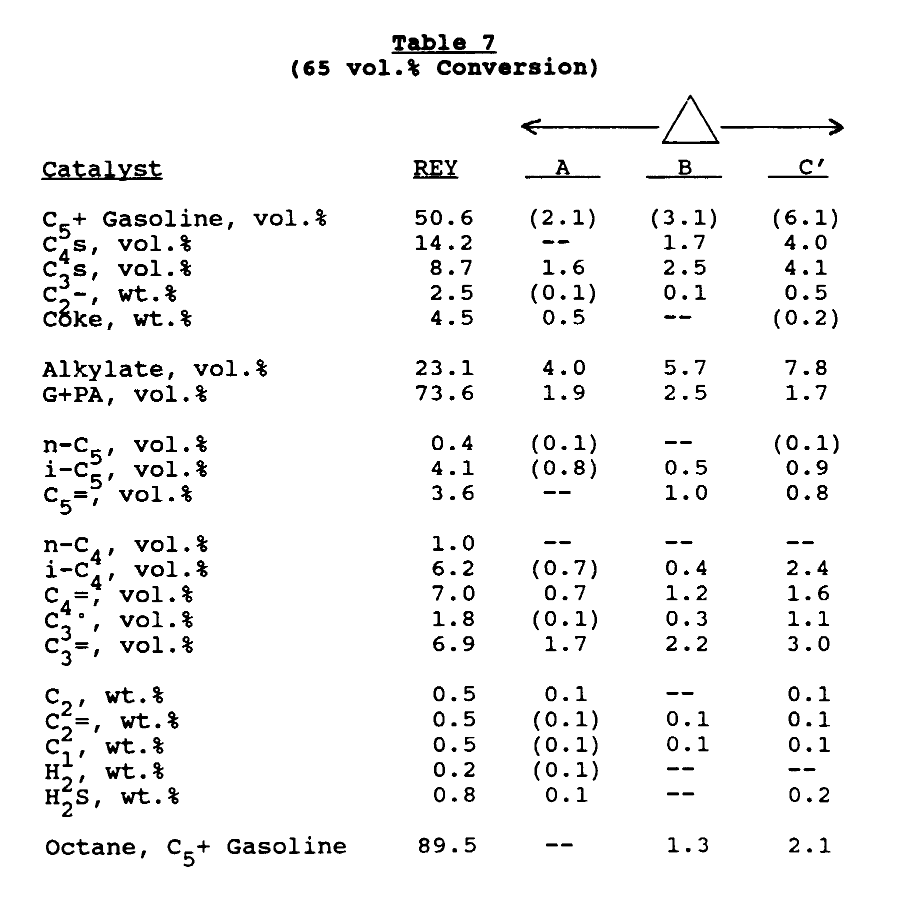

**Table 8**

| **(65 vol.% Conversion)** | | | |
|---|---|---|---|
| Catalyst | A | B | C' |
| Selectivity | | | |
| ( - ΔC₅+ Gasoline/Δ RON) | -- | 2.4 | 2.9 |
| (- ΔC₅+ Gasoline/Δ PA) | 0.5 | 0.5 | 0.8 |
| | | | |
| C₃=/C₄= (vol.%/vol.%) | 1.1 | 1.1 | 1.2 |
| ΔC₃=/ΔC₄= (vol.%/vol.%) | 2.4 | 1.8 | 1.9 |
| | | | |
| C₃=/C₃ ° (vol.%/vol.%) | 5.1 | 4.3 | 3.4 |
| ΔC₃=/Δ (C₃= + C₃) | 1.1 | 0.9 | 0.7 |
| | | | |

| Activity | | | |
|---|---|---|---|
| (ΔRON/wt.% ZSM-5) | -- | 0.7 | 1.1 |
| ( Δ PA/ wt.% ZSM-5) | 2.0 | 2.9 | 3.9 |

## Claims

1. A process for converting feedstock hydrocarbon compounds to product hydrocarbon compounds having a lower molecular weight than the feedstock hydrocarbon compounds which comprises contacting said feedstock with a catalyst composition comprising a large-pore molecular sieve material and an additive catalyst composition comprising crystalline material having the structure of ZSM-5 and a silica/alumina mole ratio of less than 30, said crystalline material having, as-synthesized, the following formula on an anhydrous basis:
(x)M₂O:(0.2 to 1.4)R₂O:Al₂O₃:(y)SiO₂
wherein x is a number greater than 0.1, M is alkali or alkaline earth metal, R is n-propylamine, and y is a number less than 30, and said additive catalyst composition having an alpha value greater than 30.

2. The process of claim 1 wherein the large-pore molecular sieve material has pore openings of greater than 7 Angstroms.

3. The process of claim 1 wherein the large-pore molecular sieve material is selected from zeolites X, Y, REX, REY, USY, REUSY, dealuminated Y, ultrahydrophobic Y, silicon-enriched dealuminated Y, ZK-4, ZK-5, ZSM-20, Beta, L, silicoaluminophosphates SAPO-5, SAPO-31, SAPO-37, SAPO-40, pillared silicates, pillared clays, and combinations thereof.

4. The process of claim 3 wherein the molecular sieve material comprises REY, USY or REUSY.

5. The process of claim 1 wherein the catalyst composition and additive catalyst composition comprise matrix material selected from silica, alumina, titania, zirconia, magnesia, kaolin, bentonite, and combinations thereof.

6. The process of claim 1 wherein the catalyst composition comprises up to 6 wt.% of the crystalline material having the structure of ZSM-5.

7. The process of claim 1 wherein the additive catalyst composition comprises from 5 wt.% to 80 wt.% of the crystalline material having the structure of ZSM-5 and from 20 wt.% to 95 wt.% matrix.

8. The process of claim 7 wherein the additive catalyst composition comprises from about 1.5 wt.% to about 5.5 wt.% elemental phosphorus based on weight of matrix.

9. A method of synthesizing the ZSM-5 additive catalyst used in the process of claim 1, the method comprising:
(i) forming a reaction mixture hydrogel having a pH of 10 to 14, and containing sources of alkali or alkaline earth metal (M) cations; an oxide of aluminum; an oxide of silicon; n-propylamine directing agent (R); and water, said reaction mixture having a composition in terms of mole ratios, within the following ranges:
| | |
|---|---|
| SiO₂/Al₂O₃ | < 40 |
| H₂O/SiO₂ | 10 to 35 |
| OH⁻/SiO₂ | 0.1 to 0.3 |
| M/SiO₂ | 0.2 to 0.6 |
| R/SiO₂ | 0.01 to 0.6 |
(ii) maintaining the reaction mixture until crystals of ZSM-5 structure are formed,
(iii) recovering the ZSM-5 crystals from the reaction mixture,
(iv) ammonium exchanging the recovered ZSM-5 crystals,
(v) deagglomerating the ammonium-exchanged crystals,
(vi) slurrying a matrix material with the deagglomerated ZSM-5 crystals at a pH of 2 to 12, to yield a ZSM-5/matrix material comprising 5 to 80 wt.% ZSM-5 and from 20 to 95 wt.% matrix,
(vii) drying the ZSM-5/matrix material, and
(viii) converting the dried ZSM-5/matrix material to the protonic form having an Alpha Value of greater than about 30.

10. The method of claim 9 wherein step (viii) comprises (1) contacting the dried ZSM-5/matrix material with mineral, carboxylic, or dicarboxylic acid, and (2) calcining the acid treated ZSM-5/matrix material at a temperature of 200°C to 550°C for 1 minute to 48 hours.

11. The method of claim 9 wherein step (viii) comprises (1) ammonium exchanging the dried ZSM-5/matrix material, and (2) calcining the ammonium exchanged ZSM-5/matrix at a temperature of 200°C to 550°C for 1 minute to 48 hours.

## Patentansprüche

1. Verfahren zur Umwandlung eines Beschickungsmaterials in Form von Kohlenwasserstoffverbindungen in ein Produkt in Form von Kohlenwasserstoffverbindungen mit geringerem Molekulargewicht als die Kohlenwasserstoffverbindungen des Beschickungsmaterials, das den Kontakt des Beschickungsmaterials mit einer Katalysatorzusammensetzung umfaßt, die ein Molekularsiebmaterial mit großen Poren und eine Zusatzkatalysatorzusammensetzung umfaßt, die ein kristallines Material mit der Struktur von ZSM-5 und einem Siliciumdioxid/Aluminiumoxid-Molverhältnis von weniger als 30 umfaßt, wobei das kristalline Material in der synthetisierten Form folgende Formel auf wasserfreier Basis hat:
(x)M₂O:(0,2 bis 1,4)R₂O:Al₂O₃:(y)SiO₂
worin x eine Zahl größer als 0,1 ist, M ein Alkali- oder Erdalkalimetall ist, R n-Propylamin ist, und y eine Zahl kleiner als 30 ist, und die Zusatzkatalysatorzusammensetzung einen α-Wert größer als 30 hat.

2. Verfahren nach Anspruch 1, wobei das Molekularsiebmaterial mit großen Poren Porenöffnungen von mehr als 7 Angström aufweist.

3. Verfahren nach Anspruch 1, wobei das Molekularsiebmaterial mit großen Poren aus den Zeolithen X, Y, REX, REY, USY, REUSY, desaluminiertem Y, ultrahydrophobem Y, mit Silicium angereichertem, desaluminiertem Y, ZK-4, ZK-5, ZSM-20, Beta, L, den Silicoaluminophosphaten SAPO-5, SAPO-31, SAPO-37, SAPO-40, gestützten Silicaten, gestützten Tonmaterialien und Kombinationen davon ausgewählt ist.

4. Verfahren nach Anspruch 3, wobei das Molekularsiebmaterial REY, USY oder REUSY umfaßt.

5. Verfahren nach Anspruch 1, wobei die Katalysatorzusammensetzung und die Zusatzkatalysatorzusammensetzung ein Matrixmaterial umfassen, das aus Siliciumdioxid, Aluminiumoxid, Titanoxid, Zirkoniumdioxid, Magnesiumoxid, Kaolin, Bentonit und Kombinationen davon ausgewählt ist.

6. Verfahren nach Anspruch 1, wobei die Katalysatorzusammensetzung bis zu 6 Gew.-% des kristallinen Materials mit der Sturktur von ZSM-5 umfaßt.

7. Verfahren nach Anspruch 1, wobei die Zusatzkatalysatorzusammensetzung 5 bis 80 Gew.-% des kristallinen Materials mit der Struktur von ZSM-5 und 20 bis 95 Gew -% Matrix umfaßt.

8. Verfahren nach Anspruch 7, wobei die Zusatzkatalysatorzusammensetzung etwa 1,5 bis etwa 5,5 Gew.-% elementaren Phosphor, bezogen auf das Gewicht der Matrix, umfaßt.

9. Verfahren zur Synthese des ZSM-5-Zusatzkatalysators, der beim Verfahren nach Anspruch 1 verwendet wird, wobei das Verfahren umfaßt:
(i) Herstellen eines Hydrogels der Reaktionsmischung, die einen pH-Wert von 10 bis 14 aufweist und Quellen von Kationen eines Alkali- oder Erdalkalimetalls (M), ein Oxid von Aluminium, ein Oxid von Silicium, ein n-Propylamin-Richtmittel (R) und Wasser enthält, wobei die Reaktionsmischung eine auf die Molverhältnisse bezogene Zusammensetzung innerhalb der folgenden Bereiche hat:
| | |
|---|---|
| SiO₂/Al₂O₃ | <40 |
| H₂O/SiO₂ | 10 bis 35 |
| OH⁻/SiO₂ | 0,1 bis 0,3 |
| M/SiO₂ | 0,2 bis 0,6 |
| R/SiO₂ | 0,01 bis 0,6 |
(ii) Halten der Reaktionsmischung, bis Kristalle der ZSM-5-Struktur entstanden sind,
(iii) Gewinnen der ZSM-5-Kristalle aus der Reaktionsmischung,
(iv) Ammoniumaustausch der gewonnenen ZSM-5-Kristalle,
(v) Desagglomerieren der dem Ammoniumaustausch unterzogenen Metalle,
(vi) Aufschlämmen eines Matrixmaterials mit den desagglomerierten ZSM-5-Kristallen bei pH = 2 bis 12, wodurch ein ZSM-5/Matrix-Material erhalten wird, das 5 bis 80 Gew.-% ZSM-5 und 20 bis 95 Gew.-% Matrix umfaßt,
(vii) Trocknen des ZSM-5/Matrix-Materials und
(viii) Überführen des getrockneten ZSM-5/Matrix-Materials in die Protonenform, die einen α-Wert von mehr als etwa 30 hat.

10. Verfahren nach Anspruch 9, wobei der Schritt (viii) umfaßt: (1) Kontakt des getrockneten ZSM-5/Matrix-Materials mit der Mineral-, Carbon- oder Dicarbonsäure und (2) Kalzinieren des der Säurebehandlung unterzogenen ZSM-5/Matrix-Materials 1 Minute bis 48 Stunden bei einer Temperatur von 200 bis 550°C.

11. Verfahren nach Anspruch 9, wobei der Schritt (viii) umfaßt: (1) Ammoniumaustausch des getrockneten ZSM-5/Matrix-Materials und (2) Kalzinieren des dem Ammoniumaustausch unterzogenen ZSM-5/Matrix 1 Minute bis 48 Stunden bei einer Temperatur von 200 bis 550°C:

## Revendications

1. Un procédé de conversion de composés hydrocarbonés d'une charge en composés hydrocarbonés finaux ayant une masse moléculaire plus basse que les composés hydrocarbonés de la charge qui comprend la mise au contact de ladite charge avec une composition de catalyseur comprenant un tamis moléculaire à grands pores et une composition de catalyseur additionnelle comprenant une substance cristalline ayant la structure de ZSM-5 et un rapport molaire silice/alumine inférieur à 30, ladite substance cristalline ayant, telle que synthétisée, la formule suivante, exprimée en terme anhydre :
(x)M₂O: (0,2 à 1,4)R₂O:Al₂O₃:(y)SiO₂
dans laquelle x est un nombre supérieur à 0,1, M est un métal alcalin ou alcalino-terreux, R est la n-propylamine, et y est un nombre inférieur à 30 et ladite composition de catalyseur additionnelle ayant une valeur de alpha supérieure à 30.

2. Le procédé selon la revendication 1, dans lequel le tamis moléculaire à grands pores a des ouvertures de pores supérieures à 7 Angstroem.

3. Le procédé selon la revendication 1, dans lequel le tamis moléculaire est choisi parmi les zéolites X, Y, REX, REY, USY, REUSY, Y désaluminisé, Y ultra-hydrophobe, Y désaluminisé enrichi de silicium, ZK-4, ZK-5, ZSM-20, Beta, L, les silicoaluminophosphates SAPO-5, SAPO 31, SAPO 37, SAPO 40, silicates colonnaires, argiles colonnaires et leurs combinaisons.

4. Le procédé selon la revendication 3, dans lequel le tamis moléculaire comprend REY, USY ou REUSY.

5. Le procédé selon la revendication 1, dans lequel la composition de catalyseur et la composition de catalyseur additionnelle comprennent une matrice choisie parmi silice, alumine, oxyde de titane, zircone, magnésie, kaolin, bentonite, et leurs combinaisons.

6. Le procédé selon la revendication 1, dans lequel la composition de catalyseur comprend jusqu'à 6 % en poids de substance cristalline ayant la structure de ZSM-5.

7. Le procédé selon la revendication 1, dans lequel la composition de catalyseur additionnelle comprend de 5 % en poids à 80 % en poids de substance cristalline ayant la structure de ZSM-5 et de 20 % en poids à 95 % en poids de matrice.

8. Le procédé selon la revendication 7, dans lequel la composition de catalyseur additionnelle comprend de 1,5 % en poids à environ 5,5% en poids de phosphore élémentaire exprimé par rapport au poids de matrice.

9. Le procédé de synthèse de catalyseur additionnel de ZSM-5 utilisé dans le procédé selon la revendication 1, le procédé comprenant :
i) la préparation d'un hydrogel de mélange réactionnel ayant un pH de 10 à 14, et contenant des sources de cation de métal (M) alcalin ou alcaline-terreux ; un oxyde d'aluminium, un oxyde de silicium, de la n-propylamine comme agent directeur (R) et de l'eau, ledit mélange réactionnel ayant une composition, exprimée en rapport molaire, dans les fourchettes suivantes :
| | |
|---|---|
| SiO₂/Al₂O₃ | < 40 |
| H₂O/SiO₂ | 10 à 35 |
| OH⁻/SiO₂ | 0,1 à 0,3 |
| M/SiO₂ | 0,2 à 0,6 |
| R/SiO₂ | 0,01 à 0,6 |
ii) le maintien du mélange réactionnel jusqu'à ce que des cristaux de structure ZSM-5 se forment,
iii) l'isolement des cristaux de ZSM-5 du mélange réactionnel,
iv) l'échange par l'ammonium des cristaux de ZSM-5 isolés,
v) désagglomération de cristaux échangés par l'ammonium,
vi) la mise en suspension de la matrice avec les cristaux de ZSM-5 désagglomérés à un pH de 2 à 12, pour obtenir un produit ZSM-5/matrice comprenant de 5 à 80 % en poids de ZSM-5 et de 20 à 95 % en poids de matrice,
vii) séchage du produit ZSM-5/matrice, et
viii) conversion du produit ZSM-5/matrice séché en la forme protonée présentant une valeur de Alpha supérieure à environ 30.

10. Le procédé selon la revendication 9, dans lequel l'étape viii) comprend (1) la mise en contact du produit ZSM-5/matrice séché avec un acide inorganique. carboxylique ou dicarhoxylique, et (2) la calcination du produit ZSM-5/matrice traité. à l'acide à une température de 200 à 552°C pendant une minute à 48 heures.

11. Le procédé selon la revendication 9, dans lequel l'étape viii) comprend (1) un échange par l'ammonium du produit ZSM-5/matrice séché, et (2) la calcination du produit ZSM-5/matrice, traité à l'acide, à une température de 200 à 550°C pendant une minute à 48 heures.
